# FASCICULE DE BREVET EUROPEEN

(11) **EP 4 282 090 B1**
(45) Date de publication et mention de la délivrance du brevet: **20.11.2024**
(21) Numéro de dépôt: 22700345.6
(22) Date de dépôt: 18.01.2022
(51) Int. Cl.: H04B 10/114, H04B 10/116

(54) **PROCÉDÉ DE COORDINATION PAR UNE HEURISTIQUE CHOISIE DE POINTS D'ACCÈS D'UN RÉSEAU OPTIQUE NON FILAIRE, ET DISPOSITIF DE COORDINATION ASSOCIÉ**
VERFAHREN ZUR KOORDINATION VON ZUGANGSPUNKTEN ZU EINEM DRAHTLOSEN OPTISCHEN NETZWERK UNTER VERWENDUNG EINER AUSGEWÄHLTEN HEURISTISCHEN FUNKTION UND ZUGEHÖRIGE KOORDINATIONSVORRICHTUNG
METHOD FOR COORDINATING ACCESS POINTS TO A WIRELESS OPTICAL NETWORK USING A SELECTED HEURISTIC, AND ASSOCIATED COORDINATION DEVICE

(30) Priorité: 25.01.2021 FR 2100655
(43) Date de publication de la demande: 29.11.2023
(73) Titulaire: Oledcomm, 78140 Velizy Villacoublay (FR)
(72) Inventeur: LEVY, Victor, 78140 Vélizy-Villacoublay (FR); DOMINGUEZ-GONZALEZ Carlos Usiel, 78140 Vélizy-Villacoublay (FR)
(74) Mandataire: Bonnet, Michel
(86) Numéro de dépôt international: PCT/IB2022/050389
(87) Numéro de publication internationale: WO 2022/157622

(56) Documents cités:
- WO-A1-2019/179761
- WO-A1-2020/104274
- DRIES VAN WAGENINGEN SIGNIFY NETHERLANDS: "G.vlc: Interference handling for neighbouring LiFi Access Points;C9", vol. 18/15, 14 April 2020 (2020-04-14), pages 1 - 11, XP044286020, Retrieved from the Internet <URL:https://www.itu.int/ifa/t/2017/sg15/docs/rgm/Q18-200420/C/T17-SG15RGM-Q18-200420-C-0009.docx> [retrieved on 20200414]

## Description

La présente invention concerne un procédé de coordination de points d'accès d'un réseau optique non filaire, et des programme d'ordinateur, dispositif de coordination et équipement de communication associés.

L'invention s'applique plus particulièrement à la coordination d'au moins deux points d'accès appartenant à un réseau optique non filaire, éventuellement de type LiFi (« Light Fidelity »), et ayant respectivement des zones de couverture subdivisées chacune en une sous-zone dite « exclusive » complétée par au moins une sous-zone dite « d'interférence » où elles se recouvrent. On comprendra que dans un réseau optique non filaire un point d'accès est le seul à pouvoir communiquer (émettre/recevoir), au moyen de signaux lumineux modulés en intensité et/ou fréquence, avec un équipement d'interface couplé à un équipement de communication (comme par exemple un téléphone mobile (éventuellement intelligent (ou « smartphone »)) ou une tablette électronique ou un ordinateur (éventuellement portable)) et présent dans sa sous-zone exclusive. En revanche, lorsque plusieurs points d'accès partagent une même sous-zone d'interférence, ils peuvent tous communiquer (émettre/recevoir), au moyen de signaux lumineux modulés en intensité et/ou fréquence, avec un équipement d'interface qui est présent dans cette sous-zone d'interférence commune, ce qui peut créer des interférences qui pénalisent lourdement le réseau.

A ce problème d'interférences vient s'ajouter le problème de la mobilité des équipements de communication auxquels sont couplés les équipements d'interface (généralement des accessoires (ou « dongles »)). En effet, lorsqu'un équipement de communication est déplacé il arrive fréquemment qu'il passe de la zone de couverture d'un premier point d'accès à la sous-zone exclusive d'un second point d'accès voisin du premier. Lorsque cet équipement de communication est en train de participer à une communication, il faut donc effectuer un transfert (ou « handover ») entre les premier et second points d'accès afin qu'il n'y ait pas d'interruption de cette communication.

La gestion des interférences et la gestion des handovers nécessitent une coordination précise des points d'accès d'un réseau optique non filaire. Cette coordination résulte d'allocations rapides et réactualisées aux points d'accès de tranches temporelles (ou « time slots ») d'un canal temporel (ou « time channel ») pendant lesquelles ils peuvent émettre au moins vers les équipements d'interface qui sont situés dans leurs zones de couverture. Ainsi, durant un canal temporel une liste de points d'accès autorisés à transmettre est définie, ce qui permet à ces points d'accès de prendre ensuite leur « tour de parole » de façon ordonnée durant les tranches temporelles successives de ce canal temporel. Bien entendu, plusieurs points d'accès peuvent communiquer respectivement avec plusieurs équipements d'interface durant une même tranche temporelle lorsqu'ils ne sont pas en situation d'interférence.

Le mécanisme qui définit l'ordre des tours de parole, et donc la coordination des points d'accès, dans un réseau optique non filaire n'est pas actuellement défini par les recommandations de l'Union Internationale des Télécommunications (ou UIT - en anglais « International Télécommunication Union (ou ITU))), en particulier dans le cas du LiFi.

Il a été proposé dans les documents brevet WO 2020/104274 et WO 2020/104288 un exemple de programmation des transmissions dans les réseaux non filaires (et notamment LiFi). Plus précisément, ces documents proposent, en présence de plusieurs points d'accès et d'interférences, une attribution automatique de créneaux horaires réservés aux points d'accès pour qu'ils annoncent leur présence sans interférence et permettent aux équipements d'usager de détecter la présence d'un point d'accès voisin dans un cycle MAC (« Medium Access Control ») unique. La détection rapide permet de reprogrammer rapidement les créneaux horaires dans le réseau afin d'éviter les interférences lorsqu'un équipement de communication pénètre dans une sous-zone d'interférence commune à deux points d'accès. Cependant, une telle solution ne s'avère pas satisfaisante dans la pratique, notamment du fait qu'elle ne concerne pas les handovers. Le document brevet WO 2019/179761 A1 divulgue également un exemple de coordination des transmissions dans les réseaux optiques non filaires.

Il peut donc être souhaité de prévoir une coordination de points d'accès complète et efficace.

A cet effet, il est notamment proposé un procédé, d'une part, destiné à permettre la coordination d'au moins deux points d'accès ayant respectivement des zones de couverture subdivisées chacune en une sous-zone exclusive complétée par au moins une sous-zone d'interférence où elles se recouvrent et faisant partie d'un réseau optique non filaire, et, d'autre part, comprenant une étape dans laquelle on alloue aux points d'accès des tranches temporelles d'un canal temporel pendant lesquelles ils peuvent émettre au moins vers des équipements d'interface situés chacun dans au moins l'une de leurs zones de couverture et couplés respectivement à des équipements de communication.

Ce procédé de coordination se caractérise par le fait que son étape comprend, pour chaque canal temporel créé :
- une première sous-étape dans laquelle on alloue à chaque équipement d'interface situé dans une sous-zone exclusive d'un point d'accès une tranche temporelle libre de ce dernier dans le canal temporel considéré, puis
- une seconde sous-étape dans laquelle, tant qu'il reste au moins un équipement d'interface situé dans une sous-zone d'interférence et sans tranche temporelle allouée, pour chaque tranche temporelle libre du canal temporel considéré,
   - on détermine un premier ensemble d'équipements d'interface compatibles avec la tranche temporelle libre considérée, puis
   - si le premier ensemble est non-vide on alloue à un équipement d'interface qu'il comprend la tranche temporelle libre considérée et compatible avec un point d'accès disponible selon une heuristique choisie, ou si le premier ensemble est vide on considère non libre la tranche temporelle libre considérée, puis
   - on effectue de nouveau la seconde sous-étape s'il y a encore une tranche temporelle libre du canal temporel considéré.

Ainsi, on obtient une coordination précise et complète des points d'accès qui facilite la gestion des interférences et des handovers.

Le procédé de coordination selon l'invention peut comporter d'autres caractéristiques qui peuvent être prises séparément ou en combinaison, et notamment :
- dans la seconde sous-étape, avant de l'effectuer de nouveau on peut mettre à jour le premier ensemble et un second ensemble de points d'accès et d'équipements d'interface pouvant encore émettre/recevoir dans la tranche temporelle considérée ;
- dans un premier mode de réalisation, dans la seconde sous-étape on peut utiliser une heuristique choisie dite « de moindre coût d'opportunité » dans laquelle on alloue une paire de point d'accès et d'équipement d'interface ayant le moindre coût d'opportunité parmi des coûts d'opportunité respectifs de toutes les paires pouvant être constituées ;
- dans un deuxième mode de réalisation, dans la seconde sous-étape on peut utiliser une heuristique choisie dite « de coût d'opportunité maximal » dans laquelle on alloue une paire de point d'accès et d'équipement d'interface ayant le coût d'opportunité maximal parmi des coûts d'opportunité respectifs de toutes les paires pouvant être constituées ;
- dans un troisième mode de réalisation, dans la seconde sous-étape on peut utiliser une heuristique choisie dite « à deux niveaux de popularité » dans laquelle on choisit d'abord un point d'accès, puis on choisit un équipement d'interface compatible avec ce point d'accès choisi. Par exemple, dans la seconde sous-étape on peut choisir d'abord un point d'accès qui crée un nombre minimal de contraintes par interférence, puis on peut choisir un équipement d'interface qui est le plus difficile à servir ;
- dans un quatrième mode de réalisation, dans la seconde sous-étape on peut utiliser une autre heuristique choisie dite « à deux niveaux de popularité » dans laquelle on choisit d'abord un équipement d'interface, puis on choisit un point d'accès compatible avec cet équipement d'interface choisi. Par exemple, dans la seconde sous-étape on peut choisir d'abord un équipement d'interface qui est le plus difficile à servir, puis on peut choisir un point d'accès qui crée un nombre minimal de contraintes par interférence ;
- le réseau optique non filaire peut être de type LiFi (Light Fidelity).

L'invention propose également un programme d'ordinateur téléchargeable depuis un réseau de communication et/ou enregistré sur un support lisible par ordinateur et/ou exécutable par un processeur, et comprenant des instructions pour l'exécution de l'étape d'un procédé de coordination du type de celui présenté ci-avant, lorsqu'il est exécuté sur un équipement à processeur(s) ou un ordinateur.

L'invention propose également un dispositif de coordination, d'une part, permettant de coordonner au moins deux points d'accès ayant respectivement des zones de couverture subdivisées chacune en une sous-zone exclusive complétée par au moins une sous-zone d'interférence où elles se recouvrent et faisant partie d'un réseau optique non filaire, et, d'autre part, comportant au moins une unité de traitement et au moins une mémoire propres à allouer aux points d'accès des tranches temporelles d'un canal temporel pendant lesquelles ils peuvent émettre au moins vers des équipements d'interface situés chacun dans au moins l'une de leurs zones de couverture et couplés respectivement à des équipements de communication.

Ce dispositif de coordination se caractérise par le fait que pour chaque canal temporel créé son unité de traitement et sa mémoire sont propres :
- a) à allouer à chaque équipement d'interface situé dans une sous-zone exclusive d'un point d'accès une tranche temporelle libre de ce dernier dans le canal temporel considéré, puis
- b) tant qu'il reste au moins un équipement d'interface situé dans une sous-zone d'interférence et sans tranche temporelle allouée, pour chaque tranche temporelle libre du canal temporel considéré,
   - à déterminer un premier ensemble d'équipements d'interface compatibles avec la tranche temporelle libre considérée, puis
   - si ce premier ensemble est non-vide, à allouer à un équipement d'interface qu'il comprend la tranche temporelle libre considérée et compatible avec un point d'accès disponible selon une heuristique choisie, ou si le premier ensemble est vide à considérer non libre la tranche temporelle libre considérée, puis
   - à effectuer de nouveau le b) s'il y a encore une tranche temporelle libre du canal temporel considéré.

L'invention propose également un équipement de communication destiné à faire partie d'un réseau optique non filaire comprenant, d'une part, au moins deux points d'accès ayant respectivement des zones de couverture subdivisées chacune en une sous-zone exclusive complétée par au moins une sous-zone d'interférence où elles se recouvrent, et, d'autre part, au moins un dispositif de coordination du type de celui présenté ci-avant.

Par exemple, cet équipement de communication peut constituer un contrôleur de réseau.

L'invention sera mieux comprise à l'aide de la description qui va suivre, donnée uniquement à titre d'exemple et faite en se référant aux dessins annexés dans lesquels :
[Fig.1] la [Fig.1] représente schématiquement et fonctionnellement un exemple de réseau optique non filaire comprenant un dispositif de coordination selon l'invention et ayant une zone de couverture globale dans laquelle sont situés trois équipements de communication équipés d'un équipement d'interface,
[Fig.2] la [Fig.2] illustre schématiquement et fonctionnellement un exemple de réalisation d'un contrôleur de réseau destiné à équiper un réseau optique non filaire et comprenant un dispositif de coordination selon l'invention, et
[Fig.3] la [Fig.3] illustre schématiquement un exemple d'algorithme mettant en oeuvre un procédé de coordination selon l'invention.

L'invention a notamment pour but de proposer un procédé de coordination, et un dispositif de coordination 1 associé, destinés à permettre la coordination d'au moins deux points d'accès APj d'un réseau optique non filaire 2 de manière à faciliter la gestion des interférences et transferts entre points d'accès APj (ou « handovers »).

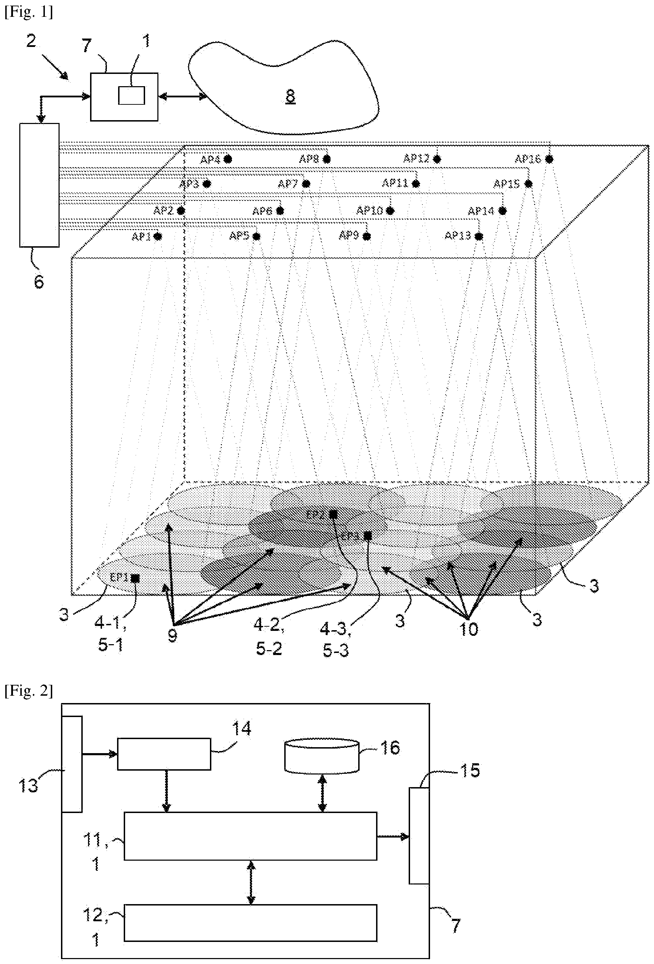

On a schématiquement et fonctionnellement représenté sur la [Fig.1] un exemple de réseau optique non filaire 2 (ci-après appelé simplement réseau). Ce réseau 2 comprend ici, non limitativement, seize points d'accès APj (j = 1 à 16) ayant chacun une zone de couverture 3 et agencés chacun pour communiquer avec des équipements d'interface 4-k qui sont couplés respectivement à des équipements de communication portables ou mobiles 5-k. Sur la [Fig.1], chaque référence EPk (ici k = 1 à 3) désigne un équipement comprenant un équipement de communication portable ou mobile 5-k auquel est couplé un équipement d'interface 4-k.

Chaque point d'accès APj fonctionne en émission et en réception. En émission, un point d'accès APj est chargé de transformer des signaux électriques porteurs d'informations (ou données), qu'il a reçus d'un routeur (ou commutateur (ou encore « switch »)) 6 du réseau 2, en signaux lumineux modulés en intensité et/ou fréquence pour transporter ces mêmes informations (ou données) et qu'il transmet dans sa zone de couverture 3 à destination d'au moins un équipement d'interface 4-k. En réception, un point d'accès APj est chargé de transformer des signaux lumineux, modulés en intensité et/ou fréquence (pour transporter des informations (ou données)) et qu'il a reçus d'un équipement d'interface 4-k, en signaux électriques porteurs de ces mêmes informations (ou données) et qu'il transmet au routeur 6.

Comme illustré non limitativement sur la [Fig.1], tous les points d'accès APj peuvent, par exemple, être solidarisés (directement ou indirectement) au plafond (ou sous-plafond) 11 d'au moins une pièce 12.

Egalement comme illustré non limitativement sur la [Fig.1], tous les points d'accès APj peuvent être couplés à un même routeur 6 avec lequel ils échangent des signaux électriques (porteurs d'informations (ou données)). Mais cela n'est pas obligatoire car un réseau 2 peut comprendre plusieurs routeurs 6. Ce routeur 6 peut, par exemple, être de type PoE (« Power over Internet » - alimentation électrique par câble Ethernet). Par ailleurs, ce routeur 6 est couplé à un contrôleur de réseau 7 qui est lui-même couplé à un réseau d'accès 8, éventuellement non filaire (par exemple de type WAN (« Wireless Access Network » - réseau d'accès non filaire). Ainsi, le routeur 6 peut échanger des signaux électriques (porteurs d'informations (ou données)) avec au moins un réseau d'accès 8. Ce réseau d'accès 8 fait éventuellement partie du réseau 2. Mais cela n'est pas obligatoire car il pourrait faire partie d'un réseau externe auquel est couplé le réseau 2.

Comme un point d'accès APj, chaque équipement d'interface 4-k fonctionne en émission et en réception. En émission, un équipement d'interface 4-k est chargé de transformer des signaux électriques porteurs d'informations (ou données), qu'il a reçus de l'équipement de communication 5-k auquel il est couplé, en signaux lumineux modulés en intensité et/ou fréquence pour transporter ces mêmes informations (ou données) et qu'il transmet à destination du point d'accès APj auquel il est temporairement couplé. En réception, un équipement d'interface 4-k est chargé de transformer des signaux lumineux, modulés en intensité et/ou fréquence (pour transporter des informations (ou données)) et qu'il a reçus d'un point d'accès APj, en signaux électriques porteurs de ces mêmes informations (ou données) et qu'il transmet à l'équipement de communication 5-k auquel il est couplé.

Par exemple un équipement d'interface 4-k peut être un accessoire (ou dongle).

Egalement par exemple, un équipement de communication 5-k peut être un téléphone mobile (éventuellement intelligent (ou smartphone)) ou une tablette électronique ou un ordinateur (éventuellement portable) ou encore une console de jeu communicante.

On notera que dans l'exemple illustré non limitativement sur la [Fig.1], le réseau 2 comprend seize points d'accès APj devant faire l'objet d'une coordination (pour leurs « tours de parole » ordonnés). Mais il peut comprendre n'importe quel nombre de points d'accès APj, dès lors que ce nombre est au moins égal à deux et que les zones de couverture 3 des points d'accès APj se recouvrent partiellement au moins deux à deux. En raison de ce recouvrement partiel entre zones de couverture 3, chaque zone de couverture 3 est subdivisée en une sous-zone dite « exclusive » 9 complétée par au moins une sous-zone dite « d'interférence » 10. Dans sa sous-zone exclusive 9 un point d'accès APj est le seul à pouvoir communiquer (émettre/ recevoir) avec un équipement d'interface 4-k couplé à un équipement de communication 5-k. Une sous-zone d'interférence 10 est une aire dans laquelle se recouvrent partiellement au moins deux zones de couverture 3 voisines, et donc susceptible de faire l'objet d'interférences. La zone de couverture globale du réseau 2 est donc égale à la somme des sous-zones exclusives 9 et des sous-zones d'interférence 10.

Dans ce qui suit on considère que le réseau 2 est de type LiFi, et donc la coordination des points d'accès APj concerne les couches protocolaires standard G.9991 et G.9961 (appelées G.vlc), définies par l'ITU. Mais l'invention n'est pas limitée à ce type de réseau. Elle concerne en effet tout type de réseau optique non filaire basé sur un multiplexage temporel et/ou fréquentiel.

Comme indiqué plus haut l'invention propose notamment un procédé de coordination destiné à permettre la coordination des points d'accès APj du réseau 2. Ce procédé de coordination peut être mis en oeuvre au moins partiellement par un dispositif de coordination 1 selon l'invention, ou bien par un programme d'ordinateur dédié exécuté sur un équipement à processeur(s) ou un ordinateur. Ce programme d'ordinateur dédié comprend des instructions pour l'exécution des étapes du procédé de coordination et est éventuellement téléchargeable depuis un réseau de communication et/ou enregistré sur un support lisible par ordinateur et/ou exécutable par un processeur (ou une unité de traitement) d'un équipement assurant la coordination des points d'accès APj.

Comme illustré non limitativement sur la [Fig.2], le dispositif de coordination 1 comporte au moins une unité de traitement 11 et au moins une mémoire 12 coopérant ensemble. L'unité de traitement 11 peut, par exemple, être un processeur, éventuellement de signal numérique (ou DSP (« Digital Signal Processor »)). La mémoire 12 stocke des fichiers de données et de programme(s) d'ordinateur dont les instructions sont destinées à être exécutées par l'unité de traitement 11 (ou processeur). Cette mémoire 12 peut, par exemple, être de type RAM (« Random Access Memory »), mais elle pourrait être d'un autre type. Cette unité de traitement 11 et cette mémoire 12 sont agencées pour effectuer ensemble des opérations assurant la coordination des points d'accès APj décrite ci-après.

Dans l'exemple illustré non limitativement sur les figures 1 et 2 le dispositif de coordination 1 fait partie d'un contrôleur de réseau 7 (ou équipement de communication) du réseau 2. Mais dans une variante de réalisation (non illustrée) le dispositif de coordination 1 pourrait être un équipement dédié (ou accessoire) rapporté dans le réseau 2, par exemple couplé au contrôleur de réseau 7. Ce dernier (7) peut éventuellement faire partie de l'un des points d'accès APj qui agit alors comme maître global, par exemple après une élection ou une prédétermination statique et/ou dynamique.

Comme illustré, le contrôleur de réseau 7 peut aussi comprendre une interface d'entrée 13 pour la réception d'au moins les signaux électriques (comportant les informations ou données) pour les utiliser dans des calculs ou traitements, éventuellement après les avoir mis en forme et/ou démodulés et/ou amplifiés, de façon connue en soi, au moyen d'un processeur de signal numérique 14. De plus, ce contrôleur de réseau 7 peut aussi comprendre une interface de sortie 15, notamment pour délivrer des messages de coordination ou transmettre des signaux électriques, et/ ou une mémoire de masse 16.

Le contrôleur de réseau 7 peut, par exemple, être réalisé sous la forme d'une combinaison de circuits ou composants électriques ou électroniques (ou « hardware »), éventuellement micro-programmés ou micro-câblées, de modules logiciels (ou « software »), de circuits intégrés de type FPGA (« Field Programmable Gate Array ») et de circuits intégrés spécialisés (ou ASIC (« Application-Specific Integrated Circuit »)).

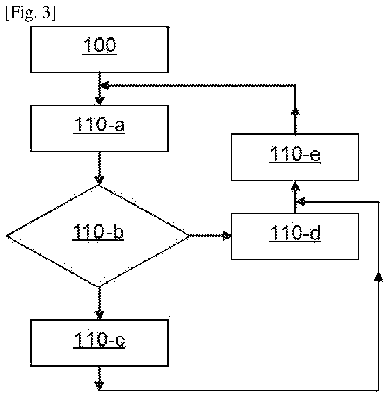

Comme illustré non limitativement par l'exemple d'algorithme de la [Fig.3], un procédé de coordination selon l'invention comprend une étape 100 et 110-a à 110-e dans laquelle on (le dispositif de coordination 1) alloue aux points d'accès APj des tranches temporelles ttn d'un canal temporel et pendant lesquelles ils peuvent émettre au moins vers des équipements d'interface 4-k qui sont situés chacun dans au moins l'une de leurs zones de couverture 3 et couplés respectivement à des équipements de communication 5-k. Comme indiqué ci-après, cette allocation se déroule en des première 100 (ou a)) et seconde 110-a à 110-e (ou b)) sous-étapes, pour chaque canal temporel et créé.

Dans la première sous-étape 100 (ou (a)), on (le dispositif de coordination 1) alloue à chaque équipement d'interface 4-k situé dans une sous-zone exclusive 9 d'un point d'accès APj (du réseau 2) une tranche temporelle ttn libre de ce dernier (APj) dans le canal temporel et considéré. On obtient ainsi des premières paires (équipement d'interface 4-k / point d'accès APj) auxquelles sont allouées respectivement des tranches temporelles ttn du canal temporel et considéré. Chacun des équipements d'interface 4-k situés dans des sous-zone exclusives 9 s'étant vu allouer une tranche temporelle ttn du canal temporel et considéré, on (le dispositif de coordination 1) peut alors s'occuper dans la seconde sous-étape 110-a à 110-e (ou b)) de l'allocation de tranches temporelles ttn encore libres aux équipements d'interface 4-k situés dans des sous-zones d'interférence 10.

Plus précisément, dans cette seconde sous-étape 110-a à 110-e (ou b)), tant qu'il reste au moins un équipement d'interface 4-k situé dans une sous-zone d'interférence 10 et sans tranche temporelle ttn allouée, pour chaque tranche temporelle ttn libre du canal temporel considéré, on (le dispositif de coordination 1) commence par déterminer dans une première sous-sous-étape 110-a un premier ensemble e1 d'équipements d'interface 4-k qui sont compatibles avec la tranche temporelle ttn libre considérée.

Puis, on (le dispositif de coordination 1) analyse dans une deuxième sous-sous-étape 110-b le contenu du premier ensemble e1. Si le premier ensemble e1 est non vide, on (le dispositif de coordination 1) alloue dans une troisième sous-sous-étape 110-c à un équipement d'interface 4-k que comprend le premier ensemble e1 la tranche temporelle ttn libre considérée et compatible avec un point d'accès APj disponible selon une heuristique choisie. En revanche, si le premier ensemble e1 est vide, on (le dispositif de coordination 1) considère non libre (ou non allouable) la tranche temporelle ttn libre considérée, dans une quatrième sous-sous-étape 110-d.

Puis, dans les deux alternatives (110-c et 110-d), on (le dispositif de coordination 1) effectue de nouveau la seconde sous-étape 110-a à 110-e (ou b)) s'il y a encore une tranche temporelle ttn libre du canal temporel et considéré.

On obtient ainsi une coordination précise et complète des points d'accès APj qui facilite la gestion des interférences et des handovers.

De préférence, dans la seconde sous-étape 110-a à 110-e, avant d'effectuer de nouveau cette dernière, on (le dispositif de coordination 1) met à jour dans une cinquième sous-sous-étape 110-e le premier ensemble e1 et un second ensemble e2 de points d'accès APj et d'équipements d'interface 4-k pouvant encore émettre/recevoir dans la tranche temporelle ttn considérée. Ces mises à jour des premier e1 et second e2 ensembles permettent de prendre en compte de nouvelles incompatibilités ayant pu être créées par les allocations effectuées.

Au moins quatre heuristiques différentes peuvent être choisies.

Dans un premier mode de réalisation, dans la seconde sous-étape 110-a à 110-e on (le dispositif de coordination 1) peut utiliser une heuristique choisie dite « de moindre coût d'opportunité ». Dans cette dernière on (le dispositif de coordination 1) alloue à chaque fois une tranche temporelle libre à la paire de point d'accès APj et d'équipement d'interface 4-k qui a le moindre coût d'opportunité parmi les coûts d'opportunité respectifs de toutes les paires (APj/4-k) pouvant être constituées.

On comprendra que dès que l'on alloue une paire (APj / 4-k), cela peut bloquer l'allocation d'au moins une autre paire (APj / 4-k) (et souvent de plusieurs autres). On définit donc un coût d'opportunité de l'allocation de la paire (APj / 4-k) comme le nombre de paires ne pouvant plus être allouées simultanément si cette paire (APj / 4-k) est choisie.

L'heuristique de moindre coût d'opportunité a donc pour but d'allouer la paire (APj / 4-k) qui a le plus petit coût d'opportunité, afin de minimiser les contraintes et donc de maximiser le nombre de paires possibles pour l'allocation à l'instant suivant.

On notera qu'il est préférable de ne pas considérer parmi les paires (APj / 4-k) bloquées celles qui comportent des équipements d'interface 4-k ayant déjà fait l'objet d'une allocation ou des points d'accès APj qui sont interdits par des interférences.

Le deuxième mode de réalisation utilise une heuristique choisie dite « de coût d'opportunité maximal » qui est l'inverse de celle du premier mode de réalisation. Dans ce deuxième mode de réalisation, dans la seconde sous-étape 110-a à 110-e on (le dispositif de coordination 1) peut allouer à chaque fois une tranche temporelle libre à la paire de point d'accès APj et d'équipement d'interface 4-k qui a le coût d'opportunité maximal parmi les coûts d'opportunité respectifs de toutes les paires (APj/4-k) pouvant être constituées.

L'heuristique de coût d'opportunité maximal a donc pour but d'allouer la paire (APj / 4-k) qui crée le plus de contrainte et donc qui a le plus fort coût d'opportunité, afin de s'en « débarrasser » le plus vite possible.

Dans un troisième mode de réalisation, dans la seconde sous-étape 110-a à 110-e on (le dispositif de coordination 1) peut utiliser une heuristique choisie dite « à deux niveaux de popularité ». Dans cette dernière on (le dispositif de coordination 1) choisit d'abord, à chaque fois, un point d'accès APj, puis on (le dispositif de coordination 1) choisit un équipement d'interface 4-k qui est compatible avec ce point d'accès APj choisi.

Par exemple, dans le troisième mode de réalisation, dans la seconde sous-étape 110-a à 110-e on (le dispositif de coordination 1) peut choisir d'abord le point d'accès APj qui crée un nombre minimal de contraintes par interférence, puis on (le dispositif de coordination 1) peut choisir l'équipement d'interface 4-k qui est le plus difficile à servir.

Avec cette dernière heuristique, la sélection se fait donc selon la popularité, c'est-à-dire le nombre d'équipements d'interface 4-k (respectivement de points d'accès APj) avec lesquels chaque point d'accès APj (respectivement équipement d'interface 4-k) peut établir une communication. A chaque seconde sous-étape 110-a à 110-e, on choisit donc l'appareil (APj ou 4-k) qui est le moins populaire, ce qui correspond grossièrement pour les points d'accès APj à ceux qui créent le moins de contraintes par interférence, et pour les équipements d'interface 4-k à ceux qui sont les plus difficiles à servir (moins de couverture).

On notera qu'avec cette dernière heuristique il est préférable que les équipements d'interface 4-k ayant déjà fait l'objet d'une allocation et les points d'accès APj qui sont interdits par des interférences ne contribuent pas au score de popularité.

Le quatrième mode de réalisation utilise une autre heuristique choisie dite « à deux niveaux de popularité » qui est l'inverse de celle du troisième mode de réalisation. Dans ce quatrième mode de réalisation, dans la seconde sous-étape 110-a à 110-e on (le dispositif de coordination 1) choisit d'abord, à chaque fois, un équipement d'interface 4-k, puis on le dispositif de coordination 1) choisit un point d'accès APj qui est compatible avec cet équipement d'interface 4-k choisi.

Par exemple, dans le quatrième mode de réalisation, dans la seconde sous-étape 110-a à 110-e on (le dispositif de coordination 1) peut choisir d'abord l'équipement d'interface 4-k qui est le plus difficile à servir, puis on (le dispositif de coordination 1) peut choisir le point d'accès APj qui crée un nombre minimal de contraintes par interférence.

On notera qu'une ou plusieurs sous-étapes 100 et 110-a à 110-e du procédé de coordination peuvent être effectuées par des composants différents. Ainsi, le procédé de coordination peut-être mis en oeuvre par une pluralité de processeurs de signal numérique, mémoire vive, mémoire de masse, interface d'entrée, interface de sortie.

On notera également que le contrôleur de réseau 7 peut éventuellement stocker et mettre à jour un tableau général (ou analogue) accessible à tout élément du réseau et définissant « quel élément de réseau est connecté avec quel autre élément de réseau » à chaque instant. Dans ce cas, chaque point d'accès APj et chaque équipement EPk stockent également ce tableau général afin de pouvoir prévoir les possibles interférences et les possibles déplacements des équipements EPk et de diriger les flux correctement, sans qu'il faille effectuer des rapports. L'invention permet donc des transferts (ou handovers) entre points d'accès APj plus rapides grâce aux prévisions des sens de déplacement des équipements EPk.

On notera également que l'on peut envisager d'effectuer une allocation du temps de parole aléatoire (ou CSMA (« Carrier Sense Multiple Access »)).

On notera également que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans la présentation détaillée de l'invention qui est faite ci-avant, les termes utilisés ne doivent pas être interprétés comme limitant l'invention aux modes de réalisation exposés dans la présente description, mais doivent être interprétés pour y inclure tous les équivalents dans la portée des revendications.

## Revendications

1. Procédé de coordination d'au moins deux points d'accès (APj) pour communication optique non filaire ayant respectivement des zones de couverture (3) subdivisées chacune en une sous-zone exclusive (9) complétée par au moins une sous-zone d'interférence (10) où elles se recouvrent et faisant partie d'un réseau optique non filaire (2), ledit procédé comprenant une étape dans laquelle on alloue auxdits points d'accès (APj) des tranches temporelles d'un canal temporel pendant lesquelles ils peuvent émettre au moins vers des équipements d'interface (4-k) situés chacun dans au moins l'une de leurs zones de couverture (3) et couplés respectivement à des équipements de communication (5-k),
**caractérisé en ce que** ladite étape comprend, pour chaque canal temporel créé :
- une première sous-étape (100) dans laquelle on alloue à chaque équipement d'interface (4-k) situé dans une sous-zone exclusive (9) d'un point d'accès (APj) une tranche temporelle libre de ce dernier (APj) dans ledit canal temporel, puis
- une seconde sous-étape (110-a - 110-e) dans laquelle, tant qu'il reste au moins un équipement d'interface (4-k) situé dans une sous-zone d'interférence (10) et sans tranche temporelle allouée, pour chaque tranche temporelle libre dudit canal temporel,
• on détermine un premier ensemble d'équipements d'interface (4-k) compatibles avec la tranche temporelle libre considérée, puis
• si ledit premier ensemble est non-vide on alloue à un équipement d'interface (4-k) qu'il comprend ladite tranche temporelle libre considérée et compatible avec un point d'accès (APj) disponible selon une heuristique choisie, ou si ledit premier ensemble est vide on considère non libre ladite tranche temporelle libre considérée, puis
• on effectue de nouveau ladite la seconde sous-étape (110-a - 110-e) s'il y a encore une tranche temporelle libre dudit canal temporel.

2. Procédé selon la revendication 1, **caractérisé en ce que** dans ladite seconde sous-étape (110-a - 110-e), avant de l'effectuer de nouveau, on met à jour ledit premier ensemble et un second ensemble de points d'accès (APj) et d'équipements d'interface (4-k) pouvant encore émettre/recevoir dans ladite tranche temporelle considérée.

3. Procédé selon la revendication 1 ou 2, **caractérisé en ce que** dans ladite seconde sous-étape (110-a - 110-e) on utilise une heuristique choisie dite de moindre coût d'opportunité dans laquelle on alloue une paire de point d'accès (APj) et d'équipement d'interface (4-k) ayant le moindre coût d'opportunité parmi des coûts d'opportunité respectifs de toutes les paires pouvant être constituées.

4. Procédé selon la revendication 1 ou 2, **caractérisé en ce que** dans ladite seconde sous-étape (110-a - 110-e) on utilise une heuristique choisie dite de coût d'opportunité maximal dans laquelle on alloue une paire de point d'accès (APj) et d'équipement d'interface (4-k) ayant le coût d'opportunité maximal parmi des coûts d'opportunité respectifs de toutes les paires pouvant être constituées.

5. Procédé selon la revendication 1 ou 2, **caractérisé en ce que** dans ladite seconde sous-étape (110-a - 110-e) on utilise une heuristique choisie dite à deux niveaux de popularité dans laquelle on choisit d'abord un point d'accès (APj), puis on choisit un équipement d'interface (4-k) compatible avec ledit point d'accès (APj) choisi.

6. Procédé selon la revendication 5, **caractérisé en ce que** dans ladite seconde sous-étape (110-a - 110-e) on choisit d'abord un point d'accès (APj) qui crée un nombre minimal de contraintes par interférence, puis on choisit un équipement d'interface (4-k) qui est le plus difficile à servir.

7. Procédé selon la revendication 1 ou 2, **caractérisé en ce que** dans ladite seconde sous-étape (110-a - 110-e) on utilise une heuristique choisie dite à deux niveaux de popularité dans laquelle on choisit d'abord un équipement d'interface (4-k), puis on choisit un point d'accès (APj) compatible avec ledit équipement d'interface (4-k) choisi.

8. Procédé selon la revendication 7, **caractérisé en ce que** dans ladite seconde sous-étape (110-a - 110-e) on choisit d'abord un équipement d'interface (4-k) qui est le plus difficile à servir, puis on choisit un point d'accès (APj) qui crée un nombre minimal de contraintes par interférence.

9. Procédé selon l'une des revendications précédentes, **caractérisé en ce que** ledit réseau optique non filaire (2) est de type LiFi.

10. Programme d'ordinateur téléchargeable depuis un réseau de communication et/ou enregistré sur un support lisible par ordinateur et/ou exécutable par un processeur, **caractérisé en ce qu'**il comprend des instructions pour l'exécution de l'étape d'un procédé de coordination selon l'une quelconque des revendications 1 à 9, lorsque ledit programme est exécuté sur un équipement à processeur(s) ou un ordinateur.

11. Dispositif de coordination (1) pour coordonner au moins deux points d'accès (APj) pour communication optique non filaire ayant respectivement des zones de couverture (3) subdivisées chacune en une sous-zone exclusive (9) complétée par au moins une sous-zone d'interférence (10) où elles se recouvrent et faisant partie d'un réseau optique non filaire (2), ledit dispositif (1) comportant au moins une unité de traitement (11) et au moins une mémoire (12) propres à allouer auxdits points d'accès (APj) des tranches temporelles d'un canal temporel pendant lesquelles ils peuvent émettre au moins vers des équipements d'interface (4-k) situés chacun dans au moins l'une de leurs zones de couverture (3) et couplés respectivement à des équipements de communication (5-k),
**caractérisé en ce que** pour chaque canal temporel créé, ladite unité de traitement (11) et ladite mémoire (12) sont propres :
- a) à allouer à chaque équipement d'interface (4-k) situé dans une sous-zone exclusive (9) d'un point d'accès (APj) une tranche temporelle libre de ce dernier (APj) dans ledit canal temporel, puis
- b) tant qu'il reste au moins un équipement d'interface (4-k) situé dans une sous-zone d'interférence (10) et sans tranche temporelle allouée, pour chaque tranche temporelle libre dudit canal temporel,
• à déterminer un premier ensemble d'équipements d'interface (4-k) compatibles avec la tranche temporelle libre considérée, puis
• si ledit premier ensemble est non-vide, à allouer à un équipement d'interface (4-k) qu'il comprend ladite tranche temporelle libre considérée et compatible avec un point d'accès (APj) disponible selon une heuristique choisie, ou si ledit premier ensemble est vide à considérer non libre ladite tranche temporelle libre considérée, puis
• à effectuer de nouveau ledit b) s'il y a encore une tranche temporelle libre dudit canal temporel.

12. Equipement de communication (7) pour un réseau optique non filaire (2) comprenant au moins deux points d'accès (APj) ayant respectivement des zones de couverture (3) subdivisées chacune en une sous-zone exclusive (9) complétée par au moins une sous-zone d'interférence (10) où elles se recouvrent, **caractérisé en ce qu'**il comprend en outre au moins un dispositif de coordination (1) selon la revendication 11.

13. Equipement de communication selon la revendication 12, **caractérisé en ce qu'**il constitue un contrôleur de réseau.

## Patentansprüche

1. Verfahren zum Koordinieren von mindestens zwei Zugangspunkten (APj) für eine drahtlose optische Kommunikation mit jeweiligen Abdeckungsbereichen (3), die jeweils in einen exklusiven Unterbereich (9) unterteilt sind, der durch mindestens einen Interferenz-Unterbereich (10) ergänzt wird, wo sie sich überlappen und Teil eines optischen drahtlosen Netzwerks (2) bilden, wobei das Verfahren einen Schritt umfasst, bei dem den Zugangspunkten (APj) Zeitschlitze eines Zeitkanals zugewiesen werden, während derer sie mindestens zu Schnittstellengeräten (4-k) senden können, die sich jeweils in mindestens einem ihrer Abdeckungsbereiche (3) befinden und jeweils mit Kommunikationsgeräten (5-k) gekoppelt sind,
**dadurch gekennzeichnet, dass** der Schritt für jeden erstellten Zeitkanal Folgendes umfasst:
- einen ersten Unterschritt (100), bei dem jedem Schnittstellengerät (4-k), das sich in einem exklusiven Unterbereich (9) eines Zugangspunkts (APj) befindet, ein freier Zeitschlitz des letzteren (APj) in dem Zeitkanal zugewiesen wird, anschließend
- einen zweiten Unterschritt (110-a - 110-e), bei dem für jeden freien Zeitschlitz des Zeitkanals, solange sich mindestens ein Schnittstellengerät (4-k) in einem Interferenz-Unterbereich (10) befindet und kein zugewiesener Zeitschlitz vorhanden ist,
• ein erster Satz von Schnittstellengeräten (4-k) bestimmt wird, die mit dem betrachteten freien Zeitschlitz kompatibel sind, anschließend
• wenn der erste Satz nicht frei ist, einem Schnittstellengerät (4-k), das er umfasst, der betrachtete, und gemäß einer gewählten Heuristik mit einem verfügbaren Zugangspunkt (APj) kompatible, freie Zeitschlitz zugewiesen wird, oder wenn der erste Satz frei ist, der betrachtete freie Zeitschlitz als nicht frei betrachtet wird, anschließend
• der zweite Unterschritt (110-a - 110-e) erneut durchgeführt wird, wenn noch ein freier Zeitschlitz des Zeitkanals vorhanden ist.

2. Verfahren nach Anspruch 1, **dadurch gekennzeichnet, dass** in dem zweiten Unterschritt (110-a - 110-e) vor dem erneuten Durchführen der erste Satz und ein zweiter Satz von Zugangspunkten (APj) und Schnittstellengeräten (4-k), die in dem betrachteten Zeitschlitz noch senden/empfangen können, aktualisiert werden.

3. Verfahren nach Anspruch 1 oder 2, **dadurch gekennzeichnet, dass** in dem zweiten Unterschritt (110-a - 110-e) eine ausgewählte Heuristik, die sogenannte der geringsten Opportunitätskosten, verwendet wird, wobei ein Paar aus Zugangspunkt (APj) und Schnittstellengerät (4-k) die geringsten Opportunitätskosten unter den jeweiligen Opportunitätskosten aller Paare, die gebildet werden können, aufweist.

4. Verfahren nach Anspruch 1 oder 2, **dadurch gekennzeichnet, dass** in dem zweiten Unterschritt (110-a - 110-e) eine ausgewählte Heuristik, die sogenannte der maximalen Opportunitätskosten, verwendet wird, wobei ein Paar aus Zugangspunkt (APj) und Schnittstellengerät (4-k) die maximalen Opportunitätskosten unter den jeweiligen Opportunitätskosten aller Paare, die gebildet werden können, aufweist.

5. Verfahren nach Anspruch 1 oder 2, **dadurch gekennzeichnet, dass** in dem zweiten Unterschritt (110-a - 110-e) eine ausgewählte Heuristik, die sogenannte zweistufigen Popularität, verwendet wird, bei der zunächst ein Zugangspunkt (APj) und anschließend ein mit dem gewählten Zugangspunkt (APj) kompatibles Schnittstellengerät (4-k) ausgewählt wird.

6. Verfahren nach Anspruch 5, **dadurch gekennzeichnet, dass** in dem zweiten Unterschritt (110-a - 110-e) zunächst ein Zugangspunkt (APj) ausgewählt wird, der eine minimale Anzahl von Einschränkungen durch Interferenzen erzeugt, und anschließend ein Schnittstellengerät (4-k) ausgewählt wird, das am schwierigsten zu bedienen ist.

7. Verfahren nach Anspruch 1 oder 2, **dadurch gekennzeichnet, dass** in dem zweiten Unterschritt (110-a - 110-e) eine ausgewählte Heuristik, die sogenannte zweistufigen Popularität, verwendet wird, bei der zunächst ein Schnittstellengerät (4-k) ausgewählt wird und anschließend ein mit dem ausgewählten Schnittstellengerät (4-k) kompatibler Zugangspunkt (APj) ausgewählt wird.

8. Verfahren nach Anspruch 7, **dadurch gekennzeichnet, dass** in dem zweiten Unterschritt (110-a - 110-e) zunächst ein Schnittstellengerät (4-k) ausgewählt wird, das am schwierigsten zu bedienen ist, und anschließend ein Zugangspunkt (APj) ausgewählt wird, der eine minimale Anzahl von Einschränkungen durch Interferenz erzeugt.

9. Verfahren nach einem der vorhergehenden Ansprüche, **dadurch gekennzeichnet, dass** das optische drahtlose Netzwerk (2) eines vom LiFi-Typ ist.

10. Computerprogramm, das aus einem Kommunikationsnetzwerk heruntergeladen werden kann und/oder das auf einem computerlesbaren Medium gespeichert ist und/oder das von einem Prozessor ausgeführt werden kann, **dadurch gekennzeichnet, dass** es Anweisungen zum Ausführen des Schritts eines Koordinierungsverfahrens nach einem der Ansprüche 1 bis 9 umfasst, wenn das Programm auf einem Gerät mit einem oder mehreren Prozessoren oder einem Computer ausgeführt wird.

11. Koordinierungsvorrichtung (1) zum Koordinieren von mindestens zwei Zugangspunkten (APj) für eine drahtlose optische Kommunikation mit jeweiligen Abdeckungsbereichen (3), die jeweils in einen exklusiven Unterbereich (9) unterteilt sind, der durch mindestens einen Interferenz-Unterbereich (10) ergänzt wird, wo sie sich überlappen und Teil eines optischen drahtlosen Netzwerks (2) bilden, wobei die Vorrichtung (1) mindestens eine Verarbeitungseinheit (11) und mindestens einen Speicher (12) umfasst, der dazu geeignet ist, den Zugangspunkten (APj) Zeitschlitze eines Zeitkanals zuzuweisen, während derer sie mindestens zu Schnittstellengeräten (4-k) senden können, die sich jeweils in mindestens einem ihrer Abdeckungsbereiche (3) befinden und jeweils mit Kommunikationsgeräten (5-k) gekoppelt sind,
**dadurch gekennzeichnet, dass** für jeden erstellten Zeitkanal die Verarbeitungseinheit (11) und der Speicher (12) für Folgendes geeignet sind:
- a) Zuweisen zu jedem Schnittstellengerät (4-k), das sich in einem exklusiven Unterbereich (9) eines Zugangspunkts (APj) befindet, eines freien Zeitschlitzes des letzteren (APj) in dem Zeitkanal, anschließend
- b) solange sich noch mindestens ein Schnittstellengerät (4-k) in einem Interferenz-Unterbereich (10) befindet und kein zugewiesener Zeitschlitz vorhanden ist, für jeden freien Zeitschlitz des Zeitkanals,
• Bestimmen eines ersten Satzes von Schnittstellengeräten (4-k), die mit dem betrachteten freien Zeitschlitz kompatibel sind, anschließend
• wenn der erste Satz nicht frei ist, Zuweisen zu einem Schnittstellengerät (4-k), das er umfasst, des betrachteten, und gemäß einer gewählten Heuristik mit einem verfügbaren Zugangspunkt (APj) kompatiblen, freien Zeitschlitzes, oder wenn der erste Satz frei ist, Betrachten des betrachteten freien Zeitschlitzes als nicht frei, anschließend
• erneutes Durchführen von b), wenn noch ein freier Zeitschlitz des Zeitkanals vorhanden ist.

12. Kommunikationsgerät (7) für ein drahtloses optisches Netzwerk (2), umfassend mindestens zwei Zugangspunkte (APj) mit jeweiligen Abdeckungsbereichen (3), die jeweils in einen exklusiven Unterbereich (9) unterteilt sind, der durch mindestens einen Interferenz-Unterbereich (10) ergänzt wird, wo sie sich überlappen, **dadurch gekennzeichnet, dass** sie ferner mindestens eine Koordinierungsvorrichtung (1) nach Anspruch 11 umfasst.

13. Kommunikationsgerät nach Anspruch 12, **dadurch gekennzeichnet, dass** es einen Netzwerkcontroller darstellt.

## Claims

1. A method for coordinating at least two access points (APj) for optical wireless communication having respective coverage areas (3) each subdivided into an exclusive sub-area (9) supplemented by at least one interference sub-area (10) where they overlap and forming part of an optical wireless network (2), said method comprising a step wherein the access points (APj) are allocated time slots of a time channel during which they can transmit at least to interface devices (4-k) each located in at least one of their coverage areas (3) and respectively coupled to communication devices (5-k),
**characterized in that** said step comprises, for each time channel created:
- a first sub-step (100) wherein each interface device (4-k) located in an exclusive sub-area (9) of an access point (APj) is allocated a free time slot of the latter (APj) in said time channel, then
- a second sub-step (110-a - 110-e) wherein, as long as there remains at least one interface device (4-k) located in an interference sub-area (10) and without an allocated time slot, for each free time slot of said time channel,
• a first set of interface devices (4-k) compatible with the considered free time slot is determined, then
• if said first set is non-empty, the considered free time slot is allocated to an interface device (4-k) which it comprises and compatible with an available access point (APj) according to a chosen heuristic, or if said first set is empty, the considered free time slot is considered not to be free, then
• said second sub-step (110-a - 110-e) is performed again if there is still a free time slot of said time channel.

2. The method as claimed in claim 1, **characterized in that** in said second sub-step (110-a - 110-e), before performing it again, said first set and a second set of access points (APj) and interface devices (4-k) still able to transmit/receive in the considered time slot are updated.

3. The method as claimed in claim 1 or 2, **characterized in that** in said second sub-step (110-a - 110-e) a so-called least opportunity cost chosen heuristic is used wherein a pair of access point (APj) and interface device (4-k) having the least opportunity cost among respective opportunity costs of all the pairs that can be constituted is allocated.

4. The method as claimed in claim 1 or 2, **characterized in that** in said second sub-step (110-a - 110-e) a so-called maximum opportunity cost chosen heuristic is used wherein a pair of access point (APj) and interface device (4-k) having the maximum opportunity cost among respective opportunity costs of all the pairs that can be constituted is allocated.

5. The method as claimed in claim 1 or 2, **characterized in that** in said second sub-step (110-a - 110-e) a so-called two-level popularity chosen heuristic is used wherein an access point (APj) is first chosen, then an interface device (4-k) compatible with said chosen access point (APj) is chosen.

6. The method as claimed in claim 5, **characterized in that** in said second sub-step (110-a - 110-e) an access point (APj) is first chosen which creates a minimum number of constraints through interference, and then an interface device (4-k) is chosen which is the most difficult to serve.

7. The method as claimed in claim 1 or 2, **characterized in that** in said second sub-step (110-a - 110-e) a so-called two-level popularity chosen heuristic is used wherein an interface device (4-k) is first chosen, then an access point (APj) compatible with said chosen interface device (4-k) is chosen.

8. The method as claimed in claim 7, **characterized in that** in said second sub-step (110-a - 110-e) an interface device (4-k) is first chosen which is the most difficult to serve, and then an access point (APj) is chosen which creates a minimum number of constraints through interference.

9. The method according to one of the preceding claims, **characterized in that** said optical wireless network (2) is of the LiFi type.

10. A computer program downloadable from a communication network and/or recorded on a computer-readable medium and/or executable by a processor, **characterized in that** it comprises instructions for executing the step of a coordination method as claimed in any one of claims 1 to 9, when said program is executed on a processor device or a computer.

11. A coordination device (1) for coordinating at least two access points (APj) for optical wireless communication having respective coverage areas (3) each subdivided into an exclusive sub-area (9) supplemented by at least one interference sub-area (10) where they overlap and forming part of an optical wireless network (2), said device (1) comprising at least one processing unit (11) and at least one memory (12) suitable for allocating to said access points (APj) time slots of a time channel during which they can transmit at least to interface devices (4-k) each located in at least one of their coverage areas (3) and respectively coupled to communication devices (5-k), **characterized in that** for each time channel created, said processing unit (11) and said memory (12) are dedicated to:
- a) allocating to each interface device (4-k) located in an exclusive sub-area (9) of an access point (APj) a free time slot of the latter (APj) in said time channel, and then
- b) as long as there remains at least one interface device (4-k) located in an interference sub-area (10) and without an allocated time slot, for each free time slot of said time channel,
• determining a first set of interface devices (4-k) compatible with the considered free time slot, then
• if said first set is non-empty, allocating to an interface device (4-k) that it comprises the considered free time slot which is compatible with an available access point (APj) according to a chosen heuristic, or if said first set is empty, considering the considered free time slot as not free, then
• performing again said b) if there is still a free time slot of said time channel.

12. A communication equipment (7) for an optical wireless network (2) comprising at least two access points (APj) having respective coverage areas (3) each subdivided into an exclusive sub-area (9) supplemented by at least one interference sub-area (10) where they overlap, **characterized in that** it further comprises at least one coordination device (1) according to claim 11.

13. The communication equipment as claimed in claim 12, **characterized in that** it constitutes a network controller.
